(19) Europäisches Patentamt
European Patent Office
Office européen des brevets

(11) EP 3 153 943 A1

(12) **EUROPEAN PATENT APPLICATION**
published in accordance with Art. 153(4) EPC

(43) Date of publication:
**12.04.2017 Bulletin 2017/15**

(21) Application number: **14893908.5**

(22) Date of filing: **15.12.2014**

(51) Int Cl.:
***G06F 3/01*** *(2006.01)*

(86) International application number:
**PCT/CN2014/093810**

(87) International publication number:
**WO 2015/184760 (10.12.2015 Gazette 2015/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.06.2014 CN 201410243499**

(71) Applicant: **SHENZHEN TCL NEW TECHNOLOGY CO., LTD**
**Nanshan District**
**Shenzhen,**
**Guangdong 518052 (CN)**

(72) Inventors:
- **ZHAO, Bo**
  **Shenzhen**
  **Guangdong 518052 (CN)**
- **HU, Jiawen**
  **Shenzhen**
  **Guangdong 518052 (CN)**

(74) Representative: **Kuhnen & Wacker**
**Patent- und Rechtsanwaltsbüro**
**Prinz-Ludwig-Straße 40A**
**85354 Freising (DE)**

# (54) AIR GESTURE INPUT METHOD AND APPARATUS

(57) The present invention discloses a mid-air gesture input method and apparatus. In embodiments of the present invention, when a writing start command is detected, gesture images are collected, and a position of a fingertip in each frame of the gesture images is acquired; a writing trajectory is generated according to the acquired positions of the fingertip in the gesture images; and when a writing end command is detected, text recognition is performed on the generated writing trajectory, to obtain text corresponding to the writing trajectory. In the embodiments of the present invention, gesture images of a user are collected to generate a writing trajectory, and text recognition is then performed on the writing trajectory, so that the user only needs to use a gesture in mid-air to implement text input, and the input manner is simple and applicable to many electronic products including a television.

When a writing start command is detected, collect gesture images, and acquire a position of a fingertip in each frame of the gesture images
S01
Generate a writing trajectory according to the acquired positions of the fingertip in the gesture images
S02
When a writing end command is detected, perform text recognition on the generated writing trajectory, to obtain text corresponding to the writing trajectory
S03

FIG. 1

EP 3 153 943 A1

## Description

## BACKGROUND

### Technical Field

The present invention relates to the fields of computer applications and mode recognition technologies, and in particular, to a mid-air gesture input method and apparatus.

### Related Art

At present, widely used text input manners include: a keyboard input manner, a touchscreen input manner, a handwriting pad input manner, and the like. The input manners such as the keyboard input manner and the handwriting pad input manner need to rely on a particular input device (for example, a keyboard, a handwriting pad, and the like) to implement text input, and have great dependence on an input device. The touchscreen input manner does not need to rely on a particular input device; however, for an electronic product, for example, a television, and a computer, that does not have a touchscreen, the touchscreen input manner is obviously inapplicable. Therefore, it is very necessary to provide an input method that is convenient, simple, and suitable for use in more electronic devices.

The foregoing content is merely used to help to understand technical solutions of the present invention, but it is not represented that it is acknowledged that the foregoing content is the prior art.

## SUMMARY

A main object of the present invention is to provide a mid-air gesture input method and apparatus, so that text input can be implemented by using a gesture in mid-air.

To implement the foregoing object, a mid-air gesture input method provided in an embodiment of the present invention includes the following steps:

when a writing start command is detected, collecting gesture images, and acquiring a position of a fingertip in each frame of the gesture images;

generating a writing trajectory according to the acquired positions of the fingertip in the gesture images; and

when a writing end command is detected, performing text recognition on the generated writing trajectory, to obtain text corresponding to the writing trajectory.

Preferably, the step of acquiring a position of a fingertip in each frame of the gesture images includes:

performing binarization processing on each frame of the gesture images, and acquiring a hand outline in the gesture image;

determining a center of mass of the hand outline; and

finding a point, having the longest distance from the center of mass of the hand outline, in the hand outline, where the point is the position of the fingertip.

Preferably, the step of generating a writing trajectory according to the acquired positions of the fingertip in the gesture images includes:

by using the position of the fingertip in a second frame of the gesture images as a start point, each time the position of the fingertip in a frame of the gesture images is acquired, connecting a point of the position of the fingertip and a point of the position of the fingertip in a previous frame of the gesture images.

Preferably, before the step of, when a writing start command is detected, collecting gesture images, and acquiring a position of a fingertip in each frame of the gesture images, the method includes:

collecting a first-frame user command gesture and a second-frame user command gesture;

determining types of the first-frame user command gesture and the second-frame user command gesture according to a stored sample image of an open hand and a stored sample image of a clenched fist; and

triggering the writing start command according to the types of the first-frame user command gesture and the second-frame user command gesture.

Preferably, the step of determining types of the first-frame user command gesture and the second-frame user command gesture according to a sample image of an open hand and a sample image of a clenched fist includes:

calculating a first similarity value between the first-frame user command gesture and the sample image of an open hand, calculating a second similarity value between the first-frame user command gesture and the sample image of a clenched fist, and determining whether the first-frame user command gesture is an open hand or a clenched fist according to the first similarity value and the second similarity value; and

calculating a third similarity value between the second-frame user command gesture and the sample image of an open hand, calculating a fourth similarity value between the second-frame user command gesture and the sample image of a clenched fist, and determining whether the second-frame user command gesture is an open hand or a clenched fist based on the third similarity value and the fourth similarity value.

Preferably, the step of triggering the writing start command according to the types of the first-frame user command gesture and the second-frame user command gesture includes:

when the first-frame user command gesture is an open hand and the second-frame user command gesture is a clenched fist, triggering the writing start command.

A mid-air gesture input apparatus further provided in an embodiment of the present invention includes:

an acquisition module, configured to: when a writing start command is detected, collect gesture images, and acquire a position of a fingertip in each frame of the gesture images;

a generation module, configured to generate a writing trajectory according to the acquired positions of the fingertip in the gesture images; and

a recognition module, configured to: when a writing end command is detected, perform text recognition on the generated writing trajectory, to obtain text corresponding to the writing trajectory.

Preferably, the acquisition module includes:

a binarization unit, configured to perform binarization processing on each frame of the gesture images, and acquire a hand outline in the gesture image;

a center of mass determining unit, configured to determine a center of mass of the hand outline; and

an acquisition unit, configured to find a point, having the longest distance from the center of mass of the hand outline, in the hand outline, where the point is the position of the fingertip; and

the generation module includes:

a generation unit, configured to: by using the position of the fingertip in a second frame of the gesture images as a start point, each time the position of the fingertip in a frame of the gesture images is acquired, connect a point of the position of the fingertip and a point of the position of the fingertip in a previous frame of the gesture images.

Preferably, the apparatus further includes:

a collection module, configured to collect a first-frame user command gesture and a second-frame user command gesture;

a determining module, configured to determine types of the first-frame user command gesture and the second-frame user command gesture according to a stored sample image of an open hand and a stored sample image of a clenched fist; and

a trigger module, configured to trigger the writing start command according to the types of the first-frame user command gesture and the second-frame user command gesture.

Preferably, the determining module includes:

a first calculation unit, configured to calculate a first similarity value between the first-frame user command gesture and the sample image of an open hand, calculate a second similarity value between the first-frame user command gesture and the sample image of a clenched fist, and determine whether the first-frame user command gesture is an open hand or a clenched fist according to the first similarity value and the second similarity value; and

a second calculation unit, configured to calculate a third similarity value between the second-frame user command gesture and the sample image of an open hand, calculate a fourth similarity value between the second-frame user command gesture and the sample image of a clenched fist, and determine whether the second-frame user command gesture is an open hand or a clenched fist based on the third similarity value and the fourth similarity value; and

the trigger module includes:

a trigger unit, configured to: when the first-frame user command gesture is an open hand and the second-frame user command gesture is a clenched fist, trigger the writing start command.

In the embodiments of the present invention, when a writing start command is detected, gesture images are collected, and a position of a fingertip in each frame of the gesture images is acquired; a writing trajectory is generated according to the acquired positions of the fingertip in the gesture images; and when a writing end command is detected, text recognition is performed on the generated writing trajectory, to obtain text corresponding to the writing trajectory. In the embodiments of the present invention, gesture images of a user are collected to generate a writing trajectory, and text recognition is then performed on the writing trajectory, so that the user only needs to use a gesture in mid-air to implement text input, and the input manner is simple and applicable to many electronic products including a television.

## BRIEF DESCRIPTION OF THE DRAWINGS

FIG. 1 is a schematic flowchart of a first embodiment of a mid-air gesture input method according to the present invention;

FIG. 2 is a schematic flowchart of a second embodiment of a mid-air gesture input method according to the present invention;

FIG. 3 is a schematic flowchart of a third embodiment of a mid-air gesture input method according to the present invention;

FIG. 4 is a schematic diagram of functional modules of a first embodiment of a mid-air gesture input apparatus according to the present invention;

FIG. 5 is a schematic diagram of functional modules of a second embodiment of a mid-air gesture input apparatus according to the present invention;

FIG. 6 is a schematic diagram of functional modules of a third embodiment of a mid-air gesture input apparatus according to the present invention; and

FIG. 7 is a schematic diagram of functional units of a determining module in the mid-air gesture input apparatus in FIG. 6.

The implementation of objects, the functional characteristics, and the advantages of the present invention are further described with reference to the embodiments and the accompanying drawings.

## DETAILED DESCRIPTION

It should be understood that the specific embodiments described herein are merely used to explain the present invention rather than to limit the present invention.

The present invention provides a mid-air gesture input method.

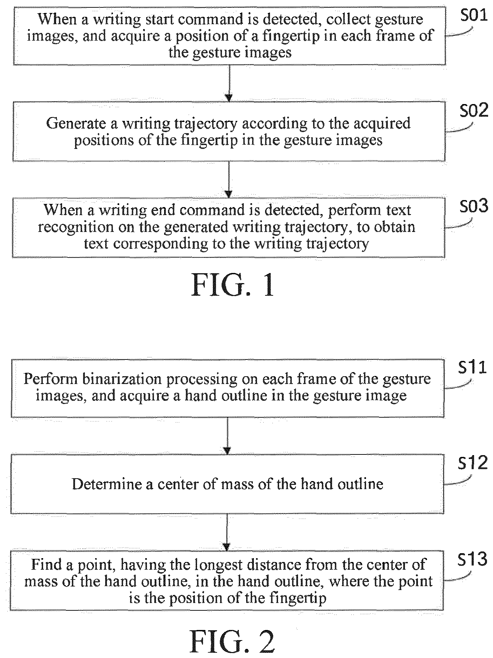

Referring to FIG. 1, FIG. 1 is a schematic flowchart of a first embodiment of a mid-air gesture input method according to the present invention.

In the first embodiment, the method includes the following steps:

Step S01: When a writing start command is detected, collect gesture images, and acquire a position of a fingertip in each frame of the gesture images.

When detecting a writing start command, an apparatus responds to the writing start command and starts to collect gesture images. For example, when detecting the writing start command, the apparatus provides a floating input box for a user to perform gesture input towards the floating input box, and at the same time the apparatus turns on a collection device (for example, a video recorder and a camera). The collection device continuously shoots the gesture images and at the same time saves the gesture images, where the gesture images may be a piece of video, or may be multiple pieces of continuous pictures.

A two-dimensional coordinate system (referred to as a coordinate system hereinafter) is established. For example, an endpoint of the floating input box is used as an origin to establish one two-dimensional coordinate system, and the collected gesture images all fall inside this two-dimensional coordinate system. At the same time when the apparatus collects gesture images, or after the apparatus has collected all gesture images, each frame of the gesture images includes a hand outline of the user. The apparatus acquires and saves the position of the fingertip according to the hand outline in each frame of the gesture images. The position of the fingertip is a coordinate value of the fingertip of the hand outline in the gesture image in the coordinate system. A method used by the apparatus to acquire the position of the fingertip in the gesture image includes: performing an image analysis on the hand outline in the gesture image, and determining the position of the fingertip according to a result of the image analysis.

Step S02: Generate a writing trajectory according to the acquired positions of the fingertip in the gesture images.

A user usually uses one finger or two fingers to perform gesture input. Even if the user uses multiple hand fingers to perform gesture input, moving trajectories of fingertips of the multiple fingers can completely represent input strokes of text. An apparatus uses a position of a fingertip in a gesture image as a positioning point. Each time the apparatus acquires a position of one fingertip, the apparatus synchronously generates the writing trajectory, or, after the apparatus has acquired positions of a fingertip in all gesture images, the apparatus generates the writing trajectory at once. A method of generating the writing trajectory includes successively connecting points, of the fingertip in the gesture images, in the coordinate system.

Step S03: When a writing end command is detected, perform text recognition on the generated writing trajectory, to obtain text corresponding to the writing trajectory.

When detecting a writing end command, an apparatus performs text recognition on a generated writing trajectory in response to the writing end command. Text recognition can be implemented by using an optical character recognition (OCR) method, or can be directly implemented by using a method such as template matching and geometrical feature extraction.

In this embodiment, when a writing start command is detected, gesture images are collected, and a position of a fingertip in each frame of the gesture images is acquired; a writing trajectory is generated according to the acquired positions of the fingertip in the gesture images; and when a writing end command is detected, text recognition is performed on the generated writing trajectory, to obtain text corresponding to the writing trajectory. In this embodiment, gesture images of a user are collected to generate a writing trajectory, and text recognition is then performed on the writing trajectory, so that the user only needs to use a gesture in mid-air to implement text input, and this input manner is simple and applicable to many electronic products including a television.

Referring to FIG. 2, FIG. 2 is a schematic flowchart of a second embodiment of a mid-air gesture input method according to the present invention.

A difference of this embodiment from the first embodiment lies in that, on the basis of the first embodiment, in this embodiment, the step of acquiring a position of a fingertip in each frame of the gesture images includes:

Step S11: Perform binarization processing on each frame of the gesture images, and acquire a hand outline in the gesture image.

Step S12: Determine a center of mass of the hand outline.

Step S 13: Find a point, having the longest distance from the center of mass of the hand outline, in the hand outline, where the point is the position of the fingertip.

An apparatus sets a skin color threshold based on history data, or, the apparatus sets a skin color threshold based on a setting instruction triggered by a technician on a user side. The apparatus performs, based on the skin color threshold, binarization processing on each frame of the gesture images, and acquires the hand outline in the gesture image, that is, sets grayscale values of pixels on each frame of the gesture images to be 0 or 255, where the gesture image on which binarization processing has been performed presents a black-and-white effect.

The apparatus acquires the hand outline in the gesture image on which binarization processing has been performed. For example, 8 adjacent pixels that are all white points in the gesture image are set as background points, and the rest points are set as outline points, where all the outline points are retrieved to form the hand outline. After acquiring the hand outline in the gesture image, the apparatus determines the center of mass of the hand outline, that is, determines the coordinate value, of the center of mass of the hand outline, in the coordinate system. A method of determining the center of mass of the hand outline includes: setting several virtual points on the hand outline, calculating a sum of distances between all points in an area of the hand outline and each virtual point on the hand outline, and determining a point, having the smallest sum of distances between all the points in the area of the hand outline and each virtual point on the hand outline, as the center of mass.

After determining the center of mass of the hand outline of each frame of the gesture images, the apparatus acquires a point, having the longest distance from the center of mass of the hand outline, on the hand outline, and sets the point as the position of the fingertip.

In this embodiment, binarization processing is performed on each frame of the gesture images, a hand outline in the gesture image is acquired to enable the gesture image to present a black-and-white effect, and the center of mass of the hand outline is then determined; therefore, a position of the center of mass of the hand outline can be accurately determined. In addition, the apparatus acquires a point, having the longest distance from the center of mass of the hand outline, on the hand outline, and sets the point as the position of the fingertip; therefore, the position of the fingertip can be accurately positioned, and the generated writing trajectory can also be made more accurate.

Referring to FIG. 2 again, in a preferred embodiment of the present invention, the step of generating a writing trajectory according to the acquired positions of the fingertip in the gesture images includes:

by using the position of the fingertip in a second frame of the gesture images as a start point, each time the position of the fingertip in a frame of the gesture images is acquired, connecting a point of the position of the fingertip and a point of the position of the fingertip in a previous frame of the gesture images.

Frames of the gesture images are arranged according to an order of collection time. After acquiring positions of a first frame and a second frame of the fingertip in the gesture images, the apparatus starts to synchronously generate the writing trajectory. First, a point, of the fingertip in the second frame of the gesture images, in the coordinate system and a point, of the fingertip in the first frame of the gesture images, in the coordinate system are connected, to generate a straight line segment or a curve segment. Each time after the position of the fingertip in a frame of the gesture images is acquired, a point of the position of the fingertip and a point of the position of the fingertip in a previous frame of the gesture images are connected, to eventually generate the writing trajectory formed of multiple straight line segments or curve segments. In this embodiment, preferably, fitting is performed on the writing trajectory formed of multiple straight line segments or curve segments, so that the eventually obtained writing trajectory is smooth.

In this embodiment, at the same time when acquiring a position of a fingertip in a gesture image, the apparatus synchronously generates a writing trajectory, which helps to improve efficiency of recognizing text input by using a gesture, so that after a user ends gesture input, input text can be rapidly recognized.

Referring to FIG. 2 again, in a preferred embodiment of the present invention, before the step of performing binarization processing on each frame of the gesture images, and acquiring a hand outline in the gesture image, the method includes: performing preprocessing on each frame of the gesture images.

The preprocessing includes: performing illumination correction and noise reduction processing on the gesture image.

Illumination correction processing is mainly processing on change information (for example, a change in illumination, and a change in angle) mixed in the gesture image. A method that can be used includes: gamma correction, image brightness nonlinear transformation, histogram equalization, maximum brightness point illumination compensation, and the like. In gamma correction and image brightness nonlinear transformation, some unrelated change information in the original gesture image can be removed through nonlinear adjustment of the gesture image pixels; and histogram equalization and maximum brightness point illumination compensation are methods for adjusting a contrast ratio of an image, and can improve a local contrast ratio of an image.

In noise reduction processing, filtering is mainly performed on noise information in the original image, and typical noise in the gesture image includes Gaussian noise, salt and pepper noise, additive noise, and the like. A method that can be used includes: mean filtering, median filtering, Gaussian filtering, and the like.

In this embodiment, preprocessing is performed on the gesture image, so as to improve a signal-to-noise ratio of the gesture image, and inhibit background noise of the gesture image, so that original image information of the gesture image can be recovered to the most realistic level, and influence of the collection device, the background, and the like on the gesture image is excluded.

Referring to FIG. 2 again, in a preferred embodiment of the present invention, before the step of performing binarization processing on each frame of the gesture images, and acquiring a hand outline in the gesture image, the method includes:

performing Gaussian blur processing on each frame of the gesture images, and converting the gesture image from a Red, Green, Blue (RGB) color space into a Hue, Saturation, Value (HSV) color space.

In this embodiment, image noise of the gesture image can be reduced and detail levels of the gesture image can be decreased by performing Gaussian blurring on the gesture image. In this embodiment, the gesture image is converted from an RGB color space into an HSV color space, so as to help to adjust color of the gesture image when binarization processing is performed on the gesture image.

Referring to FIG. 2 again, in a preferred embodiment of the present invention, before the step of acquiring a hand outline in the gesture image, the method includes: performing morphological processing on each frame of the gesture images on which binarization processing have been performed.

The morphological processing is to perform dilation and erosion on the gesture image, where dilation can fill some cavities, and erosion can clear some bulges, so that eventually edges of lines in the gesture image become smoother.

In this embodiment, morphological processing is performed on the gesture image to make edges of lines in the gesture image smoother, which helps to recognize and retrieve the hand outline in the gesture image.

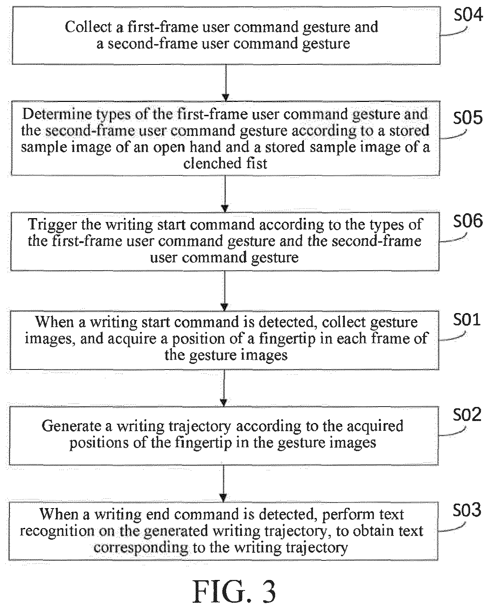

Referring to FIG. 3, FIG. 3 is a schematic flowchart of a third embodiment of a mid-air gesture input method according to the present invention.

A difference of this embodiment from the first embodiment and the second embodiment lies in that, on the basis of the first embodiment and the second embodiment, before the step of, when a writing start command is detected, collecting gesture images, and acquiring a position of a fingertip in each frame of the gesture images, this embodiment further includes:

Step S04: Collect a first-frame user command gesture and a second-frame user command gesture.

Step S05: Determine types of the first-frame user command gesture and the second-frame user command gesture according to a stored sample image of an open hand and a stored sample image of a clenched fist.

Step S06: Trigger the writing start command according to the types of the first-frame user command gesture and the second-frame user command gesture.

An apparatus can provide an independent command gesture floating input box for a user to input a command gesture, that is, the apparatus provides two floating input boxes for the user to input a command gesture and a gesture image separately. The apparatus may also provide only one floating input box both for the user to input a command gesture and for the user to input a gesture image.

The apparatus collects two frames of command gestures of the user: a first-frame user command gesture and a second-frame user command gesture, and determines types of the first-frame user command gesture and the second-frame user command gesture according to a stored sample image of an open hand and a stored sample image of a clenched fist, where the sample image of an open hand and the sample image of a clenched fist are both collected and saved in the apparatus when the user uses the gesture input method for the first time. The apparatus compares the first-frame user command gesture and the second-frame user command gesture with the sample image of an open hand and the sample image of a clenched fist respectively, so as to separately determine the types of the first-frame user command gesture and the second-frame user command gesture, that is, determines whether the first-frame user command gesture and the second-frame user command gesture are an open hand or a clenched fist. The apparatus triggers the writing start command according to the types of the first-frame user command gesture and the second-frame user command gesture, that is, the user only needs to use a gesture to control and trigger the writing start command.

In some embodiments, the apparatus may also trigger the writing end command according to the types of the first-frame user command gesture and the second-frame user command gesture, that is, the user only needs to use a gesture to control and trigger the writing end command.

In some embodiments, the apparatus may provide a speech recognizer for the user to control and trigger the writing start command and the writing end command by using speech, and the apparatus may also provide a control key for the user to control and trigger the writing start command and the writing end command by using the key.

In this embodiment, a first-frame user command gesture and a second-frame user command gesture is collected; types of the first-frame user command gesture and the second-frame user command gesture are determined according to a stored sample image of an open hand and a stored sample image of a clenched fist; and the writing start command is triggered according to the types of the first-frame user command gesture and the second-frame user command gesture. Compared with the prior art, by means of this embodiment, a user can control and trigger the writing start command by using a gesture, making use of the user convenient.

Referring to FIG. 3 again, in a preferred embodiment of the present invention, the step of determining types of the first-frame user command gesture and the second-frame user command gesture according to a sample image of an open hand and a sample image of a clenched fist includes:

calculating a first similarity value between the first-frame user command gesture and the sample image of an open hand, calculating a second similarity value between the first-frame user command gesture and the sample image of a clenched fist, and determining whether the first-frame user command gesture is an open hand or a clenched fist according to the first similarity value and the second similarity value.

The apparatus calculates the first similarity value between the first-frame user command gesture and the sample image of an open hand according to the following formula:

$$D1 = \sum_{x=0,y=0}^{x=m,y=n} \left| A(x,y) - F1(x,y) \right|$$

where D1 is the first similarity value, A(x, y) represents a curve formula, of the hand outline in the first-frame user command gesture, in the coordinate system, F1(x, y) represents a curve formula, of the hand outline in the sample image of an open hand, in the coordinate system, m and n are a width and a height of an image of the first-frame user command gesture, and the image of the first-frame user command gesture and the sample image of an open hand have a same width and height.

The apparatus calculates the second similarity value between the first-frame user command gesture and the sample image of a clenched fist according to the following formula:

$$D2 = \sum_{x=0,y=0}^{x=m,y=n} \left| A(x,y) - F2(x,y) \right|$$

where D2 is the second similarity value, A(x, y) represents a curve formula, of the hand outline in the first-frame user command gesture, in the coordinate system, F2(x, y) represents a curve formula, of the hand outline in the sample image of a clenched fist, in the coordinate system, m and n are a width and a height of an image of the first-frame user command gesture, and the image of the first-frame user command gesture and the sample image of a clenched fist have a same width and height.

when D1 is less than D2, the first-frame user command gesture is an open hand; when D1 is greater than D2, the first-frame user command gesture is a clenched fist; and when D1 is equal to D2, the process returns again to perform the step of collecting a first-frame user command gesture and a second-frame user command gesture.

The apparatus similarly determines the type of the second-frame user command gesture according to the foregoing method, which is not elaborated herein.

In this embodiment, it can be accurately determined, by calculating the first similarity value and the second similarity value, whether the first-frame user command gesture and the second-frame user command gesture are an open hand or a clenched fist.

In some embodiments, before the step of determining types of the first-frame user command gesture and the second-frame user command gesture according to a stored sample image of an open hand and a stored sample image of a clenched fist, the method further includes: performing binarization processing on the first-frame user command gesture, the second-frame user command gesture, the sample image of an open hand, and the sample image of a clenched fist, and separately acquiring the hand outlines in the first-frame user command gesture, the second-frame user command gesture, the sample image of an open hand, and the sample image of a clenched fist.

This embodiment helps to precisely acquire curve formulas, of the first-frame user command gesture, the second-frame user command gesture, the sample image of an open hand, and the sample image of a clenched fist, in the coordinate system.

Referring to FIG. 3 again, in a preferred embodiment of the present invention, the step of triggering the writing start command according to the types of the first-frame user command gesture and the second-frame user command gesture includes:

> when the apparatus detects that the first-frame user command gesture is an open hand, and the second-frame user command gesture is a clenched fist, triggering the writing start command.

A person skilled in the art may understand that the apparatus may be further set to trigger the writing start command when the first-frame user command gesture is a clenched fist and the second-frame user command gesture is an open hand.

A person skilled in the art may understand that the apparatus may be further set to trigger the writing end command when the first-frame user command gesture is a clenched fist and the second-frame user command gesture is an open hand, or, when the first-frame user command gesture is an open hand and the second-frame user command gesture is a clenched fist.

In this embodiment, it is set to trigger the writing start command when the first-frame user command gesture is an open hand and the second-frame user command gesture is a clenched fist. As compared with that the writing start command or the writing end command is triggered according to only one frame of user command gesture, in the method in this embodiment, it is avoided to determine a type of the user command gesture by mistake to trigger the writing start command or the writing end command by mistake.

The present invention further provides a mid-air gesture input apparatus.

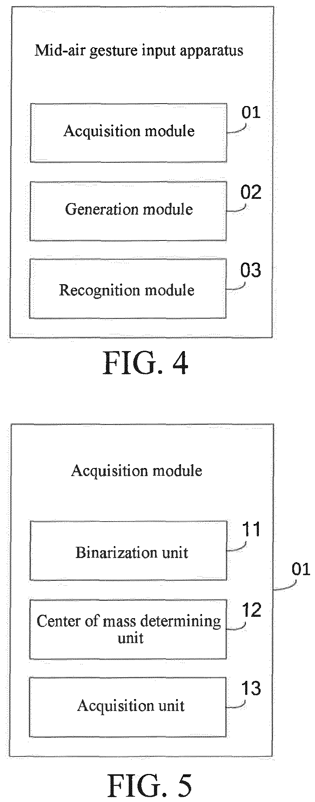

Referring to FIG. 4, FIG. 4 is a schematic diagram of functional modules of a first embodiment of a mid-air gesture input apparatus according to the present invention.

The apparatus includes an acquisition module 01, a generation module 02, and a recognition module 03.

The acquisition module 01 is configured to: when a writing start command is detected, collect gesture images, and acquire a position of a fingertip in each frame of the gesture images.

When a writing start command is detected, the acquisition module 01 responds to the writing start command and starts to collect gesture images. For example, when detecting the writing start command, the acquisition module 01 provides a floating input box for a user to perform gesture input towards the floating input box, and at the same time the acquisition module 01 turns on a collection device (for example, a video recorder and a camera). The collection device continuously shoots the gesture images and at the same time saves the gesture images, where the gesture images may be a piece of video, or may be multiple pieces of continuous pictures.

A two-dimensional coordinate system (referred to as a coordinate system hereinafter) is established. For example, an endpoint of the floating input box is used as an origin to establish one two-dimensional coordinate system, and the collected gesture images all fall inside this two-dimensional coordinate system. At the same time when the acquisition module 01 collects gesture images, or after the acquisition module 01 has collected all gesture images, each frame of the gesture images includes a hand outline of the user. The acquisition module 01 acquires and saves the position of the fingertip according to the hand outline in each frame of the gesture images. The position of the fingertip is a coordinate value of the fingertip of the hand outline in the gesture image in the coordinate system. A method used by the acquisition module 01 to acquire the position of the fingertip in the gesture image includes: performing an image analysis on the hand outline in the gesture image, and determining the position of the fingertip according to a result of the image analysis.

The generation module 02 is configured to generate a writing trajectory according to the acquired positions of the fingertip in the gesture images.

A user usually uses one finger or two fingers to perform gesture input. Even if the user uses multiple hand fingers to perform gesture input, moving trajectories of fingertips of the multiple fingers can completely represent input strokes of text. An apparatus uses a position of a fingertip in a gesture image as a positioning point. Each time the acquisition module 01 acquires a position of one fingertip, the generation module 02 synchronously generates the writing trajectory, or, after the acquisition module 01 has acquired positions of a fingertip in all gesture images, the generation module 02 generates the writing trajectory at once. A method of generating the writing trajectory includes successively connecting points, of the fingertip in the gesture images, in the coordinate system.

The recognition module 03 is configured to:

when a writing end command is detected, perform text recognition on the generated writing trajectory, to obtain text corresponding to the writing trajectory.

When detecting the writing end command, the recognition module 03 performs text recognition on a generated writing trajectory in response to the writing end command. Text recognition can be implemented by using an OCR method, or can be directly implemented by using a method such as template matching and geometrical feature extraction.

In this embodiment, when a writing start command is detected, the acquisition module 01 collects gesture images, and acquires a position of a fingertip in each frame of the gesture images; the generation module 02 generates a writing trajectory according to the acquired positions of the fingertip in the gesture images; and when detecting the writing end command, the recognition module 03 performs text recognition on the generated writing trajectory, to obtain text corresponding to the writing trajectory. In this embodiment, gesture images of a user are collected to generate a writing trajectory, and text recognition is then performed on the writing trajectory, so that the user only needs to use a gesture in mid-air to implement text input, and this input manner is simple and applicable to many electronic products including a television.

Referring to FIG. 5, FIG. 5 is a schematic diagram of functional modules of a second embodiment of a mid-air gesture input apparatus according to the present invention.

A difference of this embodiment from the first embodiment lies in that, in this embodiment, on the basis of the first embodiment, the acquisition module 01 includes:

a binarization unit 11, configured to perform binarization processing on each frame of the gesture images, and acquire a hand outline in the gesture image;

a center of mass determining unit 12, configured to determine a center of mass of the hand outline; and

an acquisition unit 13, configured to find a point, having the longest distance from the center of mass of the hand outline, in the hand outline, where the point is the position of the fingertip.

The binarization unit 11 sets a skin color threshold based on history data, or, the binarization unit 11 sets a skin color threshold based on a setting instruction triggered by a technician on a user side. The binarization unit 11 performs, based on the skin color threshold, binarization processing on each frame of the gesture images, and acquires the hand outline in the gesture image, that is, sets grayscale values of pixels on each frame of the gesture images to be 0 or 255, where the gesture image on which binarization processing has been performed presents a black-and-white effect.

The binarization unit 11 acquires the hand outline in the gesture image on which binarization processing has been performed. For example, 8 adjacent pixels that are all white points in the gesture image are set as background points, and the rest points are set as outline points, where all the outline points are retrieved to form the hand outline. After the binarization unit 11 acquires the hand outline in the gesture image, the center of mass determining unit 12 determines the center of mass of the hand outline, that is, determines the coordinate value, of the center of mass of the hand outline, in the coordinate system. A method used by the center of mass determining unit 12 to determine the center of mass of the hand outline includes: setting several virtual points on the hand outline, calculating a sum of distances between all points in an area of the hand outline and each virtual point on the hand outline, and determining a point, having the smallest sum of distances between all the points in the area of the hand outline and each virtual point on the hand outline, as the center of mass.

After the center of mass determining unit 12 determines the center of mass of the hand outline of each frame of the gesture images, the acquisition unit 13 acquires a point, having the longest distance from the center of mass of the hand outline, on the hand outline, and sets the point as the position of the fingertip.

In this embodiment, the binarization unit 11 performs binarization processing on each frame of the gesture images, acquires a hand outline in the gesture image to enable the gesture image to present a black-and-white effect, and then determines the center of mass of the hand outline; therefore, the center of mass determining unit 12 can accurately determine a position of the center of mass of the hand outline. In addition, the acquisition unit 13 acquires a point, having the longest distance from the center of mass of the hand outline, on the hand outline, and sets the point as the position of the fingertip; therefore, the position of the fingertip can be accurately positioned, and the generated writing trajectory can also be made more accurate.

Referring to FIG. 5 again, in a preferred embodiment of the present invention, the generation module 02 includes:

a generation unit (not shown), configured to: by using the position of the fingertip in a second frame of the gesture images as a start point, each time the position of the fingertip in a frame of the gesture images is acquired, connect a point of the position of the fingertip and a point of the position of the fingertip in a previous frame of the gesture images.

Frames of the gesture images are arranged according to an order of collection time. After acquiring positions of a first frame and a second frame of the fingertip in the gesture images, the generation unit starts to synchronously generate the writing trajectory. First, a point, of the fingertip in the second frame of the gesture images, in the coordinate system and a point, of the fingertip in the first frame of the gesture images, in the coordinate system are connected, to generate a straight line segment or a curve segment. Each time after the position of the fingertip in a frame of the gesture images is acquired, a point of the position of the fingertip and a point of the position of the fingertip in a previous frame of the gesture images are connected, to eventually generate the writing trajectory formed of multiple straight line segments or curve segments. In this embodiment, preferably, the generation unit performs fitting on the writing trajectory formed of multiple straight line segments or curve segments, so that the eventually obtained writing trajectory is smooth.

In this embodiment, at the same time when the acquisition module 01 acquires a position of a fingertip in the gesture image, the generation unit synchronously generates the writing trajectory, which helps to improve efficiency of recognizing text input by using a gesture, so that after a user ends gesture input, input text can be rapidly recognized.

Referring to FIG. 5 again, in a preferred embodiment of the present invention, the acquisition module 01 includes: a preprocessing unit (not shown), configured to perform preprocessing on each frame of the gesture images.

The preprocessing includes: performing illumination correction and noise reduction processing on the gesture image.

Illumination correction processing is mainly processing on change information (for example, a change in illumination, and a change in angle) mixed in the gesture image. A method that can be used includes: gamma correction, image brightness nonlinear transformation, histogram equalization, maximum brightness point illumination compensation, and the like. In gamma correction and image brightness nonlinear transformation, some unrelated change information in the original gesture image can be removed through nonlinear adjustment of the gesture image pixels; and histogram equalization and maximum brightness point illumination compensation are methods for adjusting a contrast ratio of an image, and can improve a local contrast ratio of an image.

In noise reduction processing, filtering is mainly performed on noise information in the original image, and typical noise in the gesture image includes Gaussian noise, salt and pepper noise, additive noise, and the like. A method that can be used includes: mean filtering, median filtering, Gaussian filtering, and the like.

In this embodiment, the preprocessing unit performs preprocessing on the gesture image, so as to improve a signal-to-noise ratio of the gesture image, and inhibit background noise of the gesture image, so that original image information of the gesture image can be recovered to the most realistic level, and influence of the collection device, the background, and the like on the gesture image is excluded.

Referring to FIG. 5 again, in a preferred embodiment of the present invention, the acquisition module 01 includes:

a color space conversion unit (not shown), configured to perform Gaussian blur processing on each frame of the gesture images, and convert the gesture image from an RGB color space into an HSV color space.

In this embodiment, the color space conversion unit can reduce image noise of the gesture image and decrease detail levels of the gesture image by performing Gaussian blurring on the gesture image. In this embodiment, the color space conversion unit converts the gesture image from an RGB color space into an HSV color space, so as to help to adjust color of the gesture image when binarization processing is performed on the gesture image.

Referring to FIG. 5 again, in a preferred embodiment of the present invention, the acquisition module 01 includes:

a morphological unit (not shown): configured to perform morphological processing, where the morphological processing is to perform dilation and erosion on the gesture image, where dilation can fill some cavities, and erosion can clear some bulges, so that eventually edges of lines in the gesture image become smoother.

In this embodiment, the morphological unit performs morphological processing on the gesture image to make edges of lines in the gesture image smoother, which helps to recognize and retrieve the hand outline in the gesture image.

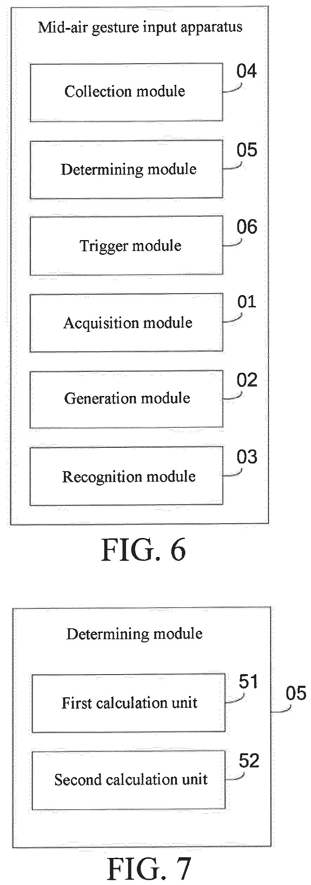

Referring to FIG. 6, FIG. 6 is a schematic diagram of functional modules of a third embodiment of a mid-air gesture input apparatus according to the present invention.

A difference of this embodiment from the first embodiment and the second embodiment lies in that, in this embodiment, on the basis of the first embodiment and the second embodiment, the apparatus further includes:

a collection module 04, configured to collect a first-frame user command gesture and a second-frame user command gesture;

a determining module 05, configured to determine types of the first-frame user command gesture and the second-frame user command gesture according to a stored sample image of an open hand and a stored sample image of a clenched fist; and

a trigger module 06, configured to trigger the writing start command according to the types of the first-frame user command gesture and the second-frame user command gesture.

The collection module 04 can provide an independent command gesture floating input box for a user to input a command gesture, that is, the collection module 04 provides two floating input boxes for the user to input a command gesture and a gesture image separately, or the collection module 04 may also provide only one floating input box both for the user to input a command gesture and for the user to input a gesture image.

The collection module 04 collects two frames of command gestures of the user: a first-frame user command gesture and a second-frame user command gesture. The determining module 05 determines types of the first-frame user command gesture and the second-frame user command gesture according to a stored sample image of an open hand and a stored sample image of a clenched fist, where the sample image of an open hand and the sample image of a clenched fist are both collected and saved in the apparatus when the user uses the gesture input method for the first time. The determining module 05 compares the first-frame user command gesture and the second-frame user command gesture with the sample image of an open hand and the sample image of a clenched fist respectively, so as to separately determine the types of the first-frame user command gesture and the second-frame user command gesture, that is, determines whether the first-frame user command gesture and the second-frame user command gesture are an open hand or a clenched fist. The trigger module 06 triggers the writing start command according to the types of the first-frame user command gesture and the second-frame user command gesture, that is, the user only needs to use a gesture to control and trigger the writing start command.

In some embodiments, the determining module 05 may also trigger the writing end command according to the types of the first-frame user command gesture and the second-frame user command gesture, that is, the user only needs to use a gesture to control and trigger the writing end command.

In some embodiments, the trigger module 06 may provide a speech recognizer for the user to control and trigger the writing start command and the writing end command by using speech, the trigger module 06 may also provide a control key for the user to control and trigger the writing start command and the writing end command by using the key.

In this embodiment, the collection module 04 collects a first-frame user command gesture and a second-frame user command gesture; the determining module 05 determines types of the first-frame user command gesture and the second-frame user command gesture according to a stored sample image of an open hand and a stored sample image of a clenched fist; and the trigger module 06 triggers the writing start command according to the types of the first-frame user command gesture and the second-frame user command gesture. Compared with the prior art, by means of this embodiment, a user can control and trigger the writing start command by using a gesture, making use of the user convenient.

Referring to FIG. 7, FIG. 7 is a schematic diagram of functional units of the determining module 05 in the mid-air gesture input apparatus in FIG. 6.

In a preferred embodiment of the present invention, the determining module 05 includes:

a first calculation unit 51, configured to calculate a first similarity value between the first-frame user command gesture and the sample image of an open hand, calculate a second similarity value between the first-frame user command gesture and the sample image of a clenched fist, and determine whether the first-frame user command gesture is an open hand or a clenched fist according to the first similarity value and the second similarity value; and

a second calculation unit 52, configured to calculate a third similarity value between the second-frame user command gesture and the sample image of an open hand, calculate a fourth similarity value between the second-frame user command gesture and the sample image of a clenched fist, and determine whether the second-frame user command gesture is an open hand or a clenched fist based on the third similarity value and the fourth similarity value.

The first calculation unit 51 calculates the first similarity value between the first-frame user command gesture and the sample image of an open hand according to the following formula:

where D1 is the first similarity value, A(x, y) represents a curve formula, of the hand outline in the first-frame user command gesture, in the coordinate system, F1(x, y) represents a curve formula, of the hand outline in the sample image of an open hand, in the coordinate system, m and n are a width and a height of an image of the first-frame user command gesture, and the image of the first-frame user command gesture and the sample image of an open hand have a same width and height.

The first calculation unit 51 calculates the second similarity value between the first-frame user command gesture and the sample image of a clenched fist according to the following formula:

where D2 is the second similarity value, A(x, y) represents a curve formula, of the hand outline in the first-frame user command gesture, in the coordinate system, F2(x, y) represents a curve formula, of the hand outline in the sample image of a clenched fist, in the coordinate system, m and n are a width and a height of an image of the first-frame user command gesture, and the image of the first-frame user command gesture and the sample image of a clenched fist have a same width and height.

when D1 is less than D2, the first-frame user command gesture is an open hand; when D1 is greater than D2, the first-frame user command gesture is a clenched fist; and when D1 is equal to D2, the process returns again to perform the step of collecting a first-frame user command gesture and a second-frame user command gesture.

The second calculation unit 52 similarly determines the type of the second-frame user command gesture according to the foregoing method, which is not elaborated herein.

In this embodiment, the first calculation unit 51 and the second calculation unit 52 calculate the first similarity value and the second similarity value, so that it can be accurately determined whether the first-frame user command gesture and the second-frame user command gesture are an open hand or a clenched fist.

In some embodiments, the acquisition module 01 further includes: a processing unit (not shown), configured to perform binarization processing on the first-frame user command gesture, the second-frame user command gesture, the sample image of an open hand, and the sample image of a clenched fist, and separately acquire the hand outlines in the first-frame user command gesture, the second-frame user command gesture, the sample image of an open hand, and the sample image of a clenched fist.

This embodiment helps to precisely acquire curve formulas, of the first-frame user command gesture, the second-frame user command gesture, the sample image of an open hand, and the sample image of a clenched fist, in the coordinate system.

Referring to FIG. 7 again, in a preferred embodiment of the present invention, the trigger module 06 includes:

a trigger unit (not shown), configured to: when the first-frame user command gesture is an open hand and the second-frame user command gesture is a clenched fist, trigger the writing start command.

When the first-frame user command gesture is an open hand and the second-frame user command gesture is a clenched fist, the trigger unit triggers the writing start command.

A person skilled in the art may understand that the trigger unit may be further set to trigger the writing start command when the first-frame user command gesture is a clenched fist and the second-frame user command gesture is an open hand.

A person skilled in the art may understand that the trigger unit may be further set to trigger the writing end command when the first-frame user command gesture is a clenched fist and the second-frame user command gesture is an open hand, or, when the first-frame user command gesture is an open hand and the second-frame user command gesture is a clenched fist.

In this embodiment, the trigger unit is set to trigger the writing start command when the first-frame user command gesture is an open hand and the second-frame user command gesture is a clenched fist. As compared with that the writing start command or the writing end command is triggered according to only one frame of user command gesture, in the method in this embodiment, it is avoided to determine a type of the user command gesture by mistake to trigger the writing start command or the writing end command by mistake.

The above are merely preferred embodiments of the present invention, and are not used to limit the patent scope of the present invention. Any equivalent structural variation or equivalent procedure variation that is made or direct or indirect application in other related technical fields by using the content of the specification and the accompanying drawings of the present invention are similarly included in the patent protection scope of the present invention.

## Claims

**1.** A mid-air gesture input method, comprising the following steps:

when a writing start command is detected, providing a floating input box to perform gesture input, collecting gesture images, performing an image analysis on a hand outline in each frame of the gesture images, and acquiring a position of a fingertip according to a result of the image analysis;
generating a writing trajectory according to the acquired positions of the fingertip in the gesture images; and
when a writing end command is detected, performing text recognition on the generated writing trajectory, to obtain text corresponding to the writing trajectory.

**2.** The mid-air gesture input method according to claim 1, wherein the step of generating a writing trajectory according to the acquired positions of the fingertip in the gesture images comprises:

by using the position of the fingertip in a second frame of the gesture images as a start point, each time the position of the fingertip in a frame of the gesture images is acquired, connecting a point of the position of the fingertip and a point of the position of the fingertip in a previous frame of the gesture images.

3. The mid-air gesture input method according to claim 1, wherein before the step of when a writing start command is detected, providing a floating input box to perform gesture input, collecting gesture images, performing an image analysis on a hand outline in each frame of the gesture images, and acquiring a position of a fingertip according to a result of the image analysis, the method comprises:

   collecting a first-frame user command gesture and a second-frame user command gesture;
   determining types of the first-frame user command gesture and the second-frame user command gesture according to a stored sample image of an open hand and a stored sample image of a clenched fist; and
   triggering the writing start command according to the types of the first-frame user command gesture and the second-frame user command gesture.

4. The mid-air gesture input method according to claim 3, wherein the step of determining types of the first-frame user command gesture and the second-frame user command gesture according to a sample image of an open hand and a sample image of a clenched fist comprises:

   calculating a first similarity value between the first-frame user command gesture and the sample image of an open hand, calculating a second similarity value between the first-frame user command gesture and the sample image of a clenched fist, and determining whether the first-frame user command gesture is an open hand or a clenched fist according to the first similarity value and the second similarity value; and
   calculating a third similarity value between the second-frame user command gesture and the sample image of an open hand, calculating a fourth similarity value between the second-frame user command gesture and the sample image of a clenched fist, and determining whether the second-frame user command gesture is an open hand or a clenched fist based on the third similarity value and the fourth similarity value.

5. The mid-air gesture input method according to claim 3, wherein the step of triggering the writing start command according to the types of the first-frame user command gesture and the second-frame user command gesture comprises:

   when the first-frame user command gesture is an open hand and the second-frame user command gesture is a clenched fist, triggering the writing start command.

6. The mid-air gesture input method according to claim 1, wherein the step of performing an image analysis on a hand outline in each frame of the gesture images, and acquiring a position of a fingertip according to a result of the image analysis comprises:

   performing binarization processing on each frame of the gesture images, and acquiring a hand outline in the gesture image;
   determining a center of mass of the hand outline; and
   finding a point, having the longest distance from the center of mass of the hand outline, in the hand outline, wherein the point is the position of the fingertip.

7. The mid-air gesture input method according to claim 6, wherein the step of generating a writing trajectory according to the acquired positions of the fingertip in the gesture images comprises:

   by using the position of the fingertip in a second frame of the gesture images as a start point, each time the position of the fingertip in a frame of the gesture images is acquired, connecting a point of the position of the fingertip and a point of the position of the fingertip in a previous frame of the gesture images.

8. The mid-air gesture input method according to claim 6, wherein before the step of, when a writing start command is detected, providing a floating input box to perform gesture input, collecting gesture images, performing an image analysis on a hand outline in each frame of the gesture images, and acquiring a position of a fingertip according to a result of the image analysis, the method comprises:

   collecting a first-frame user command gesture and a second-frame user command gesture;
   determining types of the first-frame user command gesture and the second-frame user command gesture according to a stored sample image of an open hand and a stored sample image of a clenched fist; and
   triggering the writing start command according to the types of the first-frame user command gesture and the second-frame user command gesture.

9. The mid-air gesture input method according to claim 6, wherein the step of performing binarization processing on each frame of the gesture images comprises:

   setting a skin color threshold based on history data, or, setting a skin color threshold based on a setting instruction triggered by a technician on a user side; and
setting grayscale values of pixels on each frame of the gesture images to be 0 or 255.

**10.** The mid-air gesture input method according to claim 6, wherein before the step of performing binarization processing on each frame of the gesture images, and acquiring a hand outline in the gesture image, the method comprises:

performing illumination correction and noise reduction processing on each frame of the gesture images;
performing Gaussian blur processing on each frame of the gesture images, and converting the gesture images from a Red, Green, Blue (RGB) color space into a Hue, Saturation, Value (HSV) color space; and
performing dilation and erosion processing on each frame of the gesture images on which binarization processing have been performed.

**11.** The mid-air gesture input method according to claim 8, wherein the step of determining types of the first-frame user command gesture and the second-frame user command gesture according to a sample image of an open hand and a sample image of a clenched fist comprises:

calculating a first similarity value between the first-frame user command gesture and the sample image of an open hand, calculating a second similarity value between the first-frame user command gesture and the sample image of a clenched fist, and determining whether the first-frame user command gesture is an open hand or a clenched fist according to the first similarity value and the second similarity value; and
calculating a third similarity value between the second-frame user command gesture and the sample image of an open hand, calculating a fourth similarity value between the second-frame user command gesture and the sample image of a clenched fist, and determining whether the second-frame user command gesture is an open hand or a clenched fist based on the third similarity value and the fourth similarity value.

**12.** The mid-air gesture input method according to claim 8, wherein the step of triggering the writing start command according to the types of the first-frame user command gesture and the second-frame user command gesture comprises:

when the first-frame user command gesture is an open hand and the second-frame user command gesture is a clenched fist, triggering the writing start command.

**13.** A mid-air gesture input apparatus, comprising:

an acquisition module, configured to: when a writing start command is detected, provide a floating input box to perform gesture input, collect gesture images, perform an image analysis on a hand outline in each frame of the gesture images, and acquire a position of a fingertip according to a result of the image analysis;
a generation module, configured to generate a writing trajectory according to the acquired positions of the fingertip in the gesture images; and
a recognition module, configured to: when a writing end command is detected, perform text recognition on the generated writing trajectory, to obtain text corresponding to the writing trajectory.

**14.** The mid-air gesture input apparatus according to claim 13, wherein the apparatus further comprises:

a collection module, configured to collect a first-frame user command gesture and a second-frame user command gesture;
a determining module, configured to determine types of the first-frame user command gesture and the second-frame user command gesture according to a stored sample image of an open hand and a stored sample image of a clenched fist; and
a trigger module, configured to trigger the writing start command according to the types of the first-frame user command gesture and the second-frame user command gesture.

**15.** The mid-air gesture input apparatus according to claim 14, wherein the determining module comprises:

a first calculation unit, configured to calculate a first similarity value between the first-frame user command gesture and the sample image of an open hand, calculate a second similarity value between the first-frame user command gesture and the sample image of a clenched fist, and determine whether the first-frame user command gesture is an open hand or a clenched fist according to the first similarity value and the second similarity value; and
a second calculation unit, configured to calculate a third similarity value between the second-frame user command gesture and the sample image of an open hand, calculate a fourth similarity value between the second-frame user command gesture and the sample image of a clenched fist, and determine whether the second-frame user command gesture is an open hand or a clenched fist based on the third similarity value and the fourth similarity value; and the trigger module comprises:

a trigger unit, configured to: when the first-frame user command gesture is an open hand and the second-frame user command gesture is a clenched fist, trigger the writing start command.

**16.** The mid-air gesture input apparatus according to claim 13, wherein the acquisition module comprises:

a binarization unit, configured to perform binarization processing on each frame of the gesture images, and acquire a hand outline in the gesture image;
a center of mass determining unit, configured to determine a center of mass of the hand outline; and
an acquisition unit, configured to find a point, having the longest distance from the center of mass of the hand outline, in the hand outline, wherein the point is the position of the fingertip; and
the generation module comprises:

a generation unit, configured to: by using the position of the fingertip in a second frame of the gesture images as a start point, each time the position of the fingertip in a frame of the gesture images is acquired, connect a point of the position of the fingertip and a point of the position of the fingertip in a previous frame of the gesture images.

**17.** The mid-air gesture input apparatus according to claim 16, wherein the binarization unit is further configured to set a skin color threshold based on history data, or, configured to set a skin color threshold based on a setting instruction triggered by a technician on a user side; and
the binarization unit is further configured to set grayscale values of pixels on each frame of the gesture images to be 0 or 255.

**18.** The mid-air gesture input apparatus according to claim 16, wherein the acquisition unit further comprises:

a preprocessing unit, configured to perform illumination correction and noise reduction processing on each frame of the gesture images;
a color space conversion unit, configured to perform Gaussian blur processing on each frame of the gesture images, and convert the gesture images from a Red, Green, Blue (RGB) color space into a Hue, Saturation, Value (HSV) color space; and
a morphological unit, configured to perform dilation and erosion processing on the gesture images on which binarization processing have been performed.

**19.** The mid-air gesture input apparatus according to claim 16, wherein the apparatus further comprises:

a collection module, configured to collect a first-frame user command gesture and a second-frame user command gesture;
a determining module, configured to determine types of the first-frame user command gesture and the second-frame user command gesture according to a stored sample image of an open hand and a stored sample image of a clenched fist; and
a trigger module, configured to trigger the writing start command according to the types of the first-frame user command gesture and the second-frame user command gesture.

**20.** The mid-air gesture input apparatus according to claim 19, wherein the determining module comprises:

a first calculation unit, configured to calculate a first similarity value between the first-frame user command gesture and the sample image of an open hand, calculate a second similarity value between the first-frame user command gesture and the sample image of a clenched fist, and determine whether the first-frame user command gesture is an open hand or a clenched fist according to the first similarity value and the second similarity value; and
a second calculation unit, configured to calculate a third similarity value between the second-frame user command gesture and the sample image of an open hand, calculate a fourth similarity value between the second-frame user command gesture and the sample image of a clenched fist, and determine whether the second-frame user command gesture is an open hand or a clenched fist based on the third similarity value and the fourth similarity value; and
the trigger module comprises:

a trigger unit, configured to: when the first-frame user command gesture is an open hand and the second-frame user command gesture is a clenched fist, trigger the writing start command.

When a writing start command is detected, collect gesture images, and acquire a position of a fingertip in each frame of the gesture images
S01
Generate a writing trajectory according to the acquired positions of the fingertip in the gesture images
S02
When a writing end command is detected, perform text recognition on the generated writing trajectory, to obtain text corresponding to the writing trajectory
S03

FIG. 1

Perform binarization processing on each frame of the gesture images, and acquire a hand outline in the gesture image
S11
Determine a center of mass of the hand outline
S12
Find a point, having the longest distance from the center of mass of the hand outline, in the hand outline, where the point is the position of the fingertip
S13

FIG. 2

S04
Collect a first-frame user command gesture and a second-frame user command gesture
S05
Determine types of the first-frame user command gesture and the second-frame user command gesture according to a stored sample image of an open hand and a stored sample image of a clenched fist
S06
Trigger the writing start command according to the types of the first-frame user command gesture and the second-frame user command gesture
S01
When a writing start command is detected, collect gesture images, and acquire a position of a fingertip in each frame of the gesture images
S02
Generate a writing trajectory according to the acquired positions of the fingertip in the gesture images
S03
When a writing end command is detected, perform text recognition on the generated writing trajectory, to obtain text corresponding to the writing trajectory

FIG. 3

Mid-air gesture input apparatus
Acquisition module
01
Generation module
02
Recognition module
03

FIG. 4

Acquisition module
Binarization unit
11
01
Center of mass determining unit
12
Acquisition unit
13

FIG. 5

Mid-air gesture input apparatus
Collection module
04
Determining module
05
Trigger module
06
Acquisition module
01
Generation module
02
Recognition module
03

FIG. 6

Determining module
First calculation unit
51
Second calculation unit
52
05

FIG. 7

## INTERNATIONAL SEARCH REPORT

International application No. **PCT/CN2014/093810**

**A. CLASSIFICATION OF SUBJECT MATTER**

G06F 3/01 (2006.01) i

According to International Patent Classification (IPC) or to both national classification and IPC

**B. FIELDS SEARCHED**

Minimum documentation searched (classification system followed by classification symbols)

G06F 3/-

Documentation searched other than minimum documentation to the extent that such documents are included in the fields searched

Electronic data base consulted during the international search (name of data base and, where practicable, search terms used)

CNKI, VEN, CNABS, WPI, EPODOC: trajectory, character, aerial, gesticulation, import, order, begin, image, finger tip, contrail, letter, identify

**C. DOCUMENTS CONSIDERED TO BE RELEVANT**

| Category* | Citation of document, with indication, where appropriate, of the relevant passages | Relevant to claim No. |
|---|---|---|
| A | CN 102508547 A (HARBIN INSTITUTE OF TECHNOLOGY SHENZHEN GRADUATE SCHOOL), 20 June 2012 (20.06.2012), claims 1-6 | 1-20 |
| A | CN 103577843 A (INSTITUTE OF AUTOMATION, CHINESE ACADEMY OF SCIENCES), 12 February 2014 (12.02.2014), claims 1-6 | 1-20 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 12 March 2015 (12.03.2015) | **24 March 2015 (24.03.2015)** |

Name and mailing address of the ISA/CN:
State Intellectual Property Office of the P. R. China
No. 6, Xitucheng Road, Jimenqiao
Haidian District, Beijing 100088, China
Facsimile No.: (86-10) 62019451

Authorized officer
**AI, Pan**
Telephone No.: (86-10) **62411707**

Form PCT/ISA/210 (second sheet) (July 2009)

# INTERNATIONAL SEARCH REPORT
Information on patent family members

International application No.
**PCT/CN2014/093810**

| Patent Documents referred in the Report | Publication Date | Patent Family | Publication Date |
|---|---|---|---|
| CN 102508547 A | 20 June 2012 | None | |
| CN 103577843 A | 12 February 2014 | None | |

Form PCT/ISA/210 (patent family annex) (July 2009)